# EUROPÄISCHE PATENTSCHRIFT

(11) **EP 1 804 363 B1**
(45) Veröffentlichungstag und Bekanntmachung des Hinweises auf die Patenterteilung: **11.11.2009**
(21) Anmeldenummer: 06025634.4
(22) Anmeldetag: 12.12.2006
(51) Int. Cl.: H02K 7/18, B61D 43/00

(54) **Achsgenerator für Eisenbahnwagen und schienengebundene, nicht selbstangetriebene Fahrzeuge**
Axle generator for railway carriages and for unpropelled rail-bound vehicles
Génératrice de l'essieu pour wagon de train et pour véhicules sur rail non-autopropulsés

(30) Priorität: 30.12.2005 DE 102005063165
(43) Veröffentlichungstag der Anmeldung: 04.07.2007
(73) Patentinhaber: Landert-Motoren-AG, 8180 Bülach (CH)
(72) Erfinder: Roth, Kurt, 8105 Watt (CH)
(74) Vertreter: Riebling, Peter

(56) Entgegenhaltungen:
- JP-A- 4 067 748
- JP-A- 9 023 624
- JP-A- 9 117 099

## Beschreibung

Die Erfindung betrifft ein Achsgeneratorsystem für Eisenbahnwagen nach dem Oberbegriff des Patentanspruchs 1. Unter dem Begriff "Eisenbahnwagen" werden sämtliche schienengebundenen, nicht-selbstangetriebenen Fahrzeuge verstanden.

In der EP 1 033 296 A2 ist ein Achsgenerator gezeigt, der direkt an der Achse angeflanscht wird. Allerdings ist der Achsgenerator unmittelbar stirnseitig auf das Achslager angeflanscht, was mit schwerwiegenden Nachteilen verbunden ist. Der erste Nachteil ist, dass der in axialer Richtung weisende, stirnseitige Einbauraum am Achslager stark begrenzt ist und daher ein großvolumiger Generator mit einer entsprechenden Abgabeleistung dort nicht montiert werden kann. Der Achsgenerator darf mithin nur um eine begrenzte Länge über die äußere Stirnseite der Radsatzwelle heraus ragen.

Weiterer Nachteil ist, dass die Durchführung der einen relativ großen Durchmesser aufweisenden Achse durch das Achslager hindurch konstruktive Probleme bereitet. Es können daher im Durchmesser verringerte Wellenstümpfe stirnseitig herausgeführt werden. Damit können jedoch nur geringe Drehmomente bei geringer Belastbarkeit auf den Achsgenerator übertragen werden.

Ein solcher Achsgenerator ist deshalb nur zur Messung der Drehzahl bzw. der Wegstrecke geeignet und nicht zur Erzeugung einer eigenständigen Stromversorgung in einem Eisenbahnwaggon.

Auch bei der DE 197 48 392 A1, der DE 197 56 904 A1, sowie der DE 41 19 834 A1 und der DE 695 24 014 T2 wird ein Stromgenerator an einen von der Achse abgezweigten und dort angeflanschten Wellenstumpf angesetzt. Eine Übertragung hoher Drehmomente ist über einen solchen Wellenstumpf jedoch nicht möglich.

Es handelt sich jeweils um stirnseitig an die Radsatzwelle angeflanschte Stromgeneratoren, auf die nur niedrige Drehmomente übertragen werden und die wegen der Begrenzung der axialen Länge der Radsatzwelle nur kleinvolumig im Aufbau bei geringer elektrischer Leistung sein können.

Mit der Druckschrift JP 04 067748 A wird ein Achsgenerator für Eisenbahnwagen mit einem drehfest mit einer Radsatzwelle verbundenen Rotor und ein gehäusefest angebundenes Statorgehäuse, wodurch der Achsgenerator direkt auf der Radsatzwelle angeflanscht und von dieser durchgriffen ist, wobei der Rotor auf seiner radialen Außenseite Permanentmagnete aufweist.
Nachteil dieser Druckschrift ist dass die Permanentmagnete auf der radialen Außenseite des Rotors angeordnet sind, wodurch diese ungeschützt gegen Schmutz und vor Beschädigung sind.

Mit der Druckschrift JP 09 117099 A wird ein Achsgenerator offenbart, wobei der angeordnete Rotor lediglich aus zwei zueinander symmetrischen Halbschalen gebildet ist, welche direkt auf der Radsatzwelle angeflanscht sind und auf ihrem radialen Außenumfang als Klötzchen ausgebildete Permanentmagnete aufweist.
Diese Druckschrift weist den Nachteil auf, dass die am radialen Außenumfang der Rotorhalbschalen angeordneten Permanentmagnete ungeschützt sind, wobei deren Verankerung bzw. Befestigung eine verminderte Haltbarkeit gegenüber von in Schlitzen angeordneten Permanentmagneten darstellt.

Mit der Druckschrift JP 09 023624 A wird ein Achsgenerator offenbart, wobei der angeordnete Rotor lediglich aus zwei zueinander symmetrischen Halbschalen gebildet ist, welche direkt auf der Radsatzwelle angeflanscht sind und auf ihrem radialen Außenumfang als Klötzchen ausgebildete Permanentmagnete aufweist.
Diese Druckschrift weist den Nachteil auf, dass die am radialen Außenumfang der Rotorhalbschalen angeordneten Permanentmagnete ungeschützt sind, wobei deren Verankerung bzw. Befestigung eine verminderte Haltbarkeit darstellt.

Ausgehend von JP04067748 stell sich sich daher die Aufgabe einen Achsgenerator für schienengebundene Fahrzeuge der eingangs genannten Art so weiterzubilden, dass dieser eine verbesserte Verschleißfestigkeit und eine verminderte Störanfälligkeit aufweist.

Zur Lösung der gestellten Aufgabe ist die Erfindung durch die technische Lehre des Anspruchs 1 gekennzeichnet. Bevorzugte Ausführungsformen sind in den abhängigen Ansprüchen definiert.

Ein wesentliche Merkmal der Erfindung ist, dass der Achsgenerator unmittelbar auf der Radsatzwelle sitzt und von dieser durchgriffen ist.

Mit der gegebenen technischen Lehre ergibt sich der wesentliche Vorteil, dass nun eine sehr hohe Drehmomentenübertragung direkt von der Radsatzwelle auf den Achsgenerator erfolgen kann, denn es wird eine stirnseitige Anflanschung des Achsgenerators vermieden und stattdessen ist vorgesehen, dass dieser unmittelbar - etwa in der Mitte der Radsatzwelle - von der Radsatzwelle durchgriffen ist.

Der mittige Einbauort auf der Radsatzwelle ist nur beispielhaft angegeben. In anderen Ausführungen kann auch ein Einbauort von 1/3 zu 2/3 der Länge der Radsatzwelle für den Achsgenerator vorgesehen werden. Ebenso können auch mehrere Achsgeneratoren parallel und in gegenseitigem Abstand auf eine Radsatzwelle angeordnet sein.

Damit besteht nicht mehr das Problem, dass relativ gering belastbare Wellenstümpfe stirnseitig aus der Radsatzwelle herausgeführt werden müssen, um einen dort angeordneten Achsgenerator anzutreiben. Dies wurde bereits schon eingehend eingangs als nachteilig geschildert, weil auf einen stirnseitig angeordneten Achsgenerator nur relativ geringe Drehmomente übertragen werden können und dieser - in unerwünschter Weise - die Einbaulänge der Radsatzwelle vergrößert.

Hier setzt die Erfindung ein, die vorsieht, dass unmittelbar auf der großvolumigen und hohe Drehmomente übertragenden Radsatzwelle der Achsgenerator angeflanscht ist.

In einer Weiterbildung der vorliegenden Erfindung ist vorgesehen, dass der Achsgenerator zweiteilig ausgebildet ist und aus zwei spiegelsymmetrisch zueinander angeordneten Hälften besteht, die miteinander verschraubbar sind.

Mit dieser technischen Lehre wird der Vorteil einer einfachen Montage des Achsgenerators erzielt.

Ein hochleistungsfähiger Achsgenerator ermöglicht bei einer Abgabeleistung von 25 kW eine entsprechende Stromabgabe im Bereich von 150 A Wechselstrom bei 3-phasigem Drehstrom.

Diese Leistung wird bereits schon ab einer Umdrehung von 200 U/min erzielt, was erzwingt, dass der Stromgenerator relativ großvolumig ausgebildet ist.

Es handelt sich bevorzugt um einen bürstenlosen, permanenterregten Drehstromgenerator, der bei einem bevorzugten Außendurchmesser von etwa 600 mm eine axiale Länge von etwa 400 mm bei einem Gewicht von etwa 350 kg aufweist. Es ist bisher nicht möglich gewesen, einen solchen großvolumigen Achsgenerator zuverlässig mit der Radsatzwelle zu koppeln und schon gar nicht stirnseitig anzusetzen.

Die hier angegebenen Größen- und Leistungsangaben sind nicht einschränkend für den Bereich der Erfindung zu sehen. Sie dienen nur zur Erläuterung einer bevorzugten Ausführungsform. Außerdem wird dadurch deutlich, dass ein solcher Achsgenerator - wegen seiner axialen Länge und seines Außendurchmessers - nicht stirnseitig an eine Radsatzwelle angeflanscht werden kann.

Hintergrund der vorliegenden Erfindung ist, dass der Stromgenerator mit der angegebenen elektrischen Leistung eine vollkommen autarke Stromversorgung eines Eisenbahnwaggons bewerkstelligt. Ein solcher Eisenbahnwaggon hat mindestens eine Lichtanlage, eine Lüftungsanlage und eine Klimatisierungsanlage. Bei der Klimatisierungsanlage ist ein Kompressor mit Strom zu versorgen, der eine relativ große Stromaufnahme hat.

Der dreiphasige Wechselstromausgang des Generators ist auf einen Stromrichter geschaltet, der über ein Lademodul eine Batterie speist. Mit der Stromabgabe der Batterie wird die gesamte Stromversorgung im Waggon bereitgestellt. Die im Eisenbahnwaggon angeordneten elektrischen Verbraucher werden mit einer Niederspannung von 130 Volt DC versorgt. Damit ist sichergestellt, dass die Stromversorgung im Waggon nicht ausfällt, wenn der Waggon steht.

Die Erfindung ist jedoch nicht auf eine solche Batteriestromversorgung beschränkt. Es kann auch eine Direktversorgung mit dem erfindungsgemäßen Achsgenerator vorgesehen sein. Ebenso können an einem Waggon mehrere Achsgeneratoren angeordnet sein. Es kann beispielsweise jede Radsatzwelle einen solchen Generator tragen. Auf einer Radsatzwelle können auch mehrere Achsgeneratoren angeordnet sein.

Die Verwendung von durchgehenden, nicht geteilte Achsgeneratoren war, mit dem Nachteil verbunden , dass diese nur entweder stirnseitig an der Radsatzwelle angeflanscht werden konnten oder sie mussten am Drehgestellrahmen angeordnet werden und über einen Transmissionsriemen mit der Radsatzwelle verbunden werden. Die aufwendige Transmissionsübertragung vermeidet die Erfindung, indem ein direkt auf der Radsatzwelle sitzenden Achsgenerator vorgeschlagen wird.

Es hat sich herausgestellt, dass ein Transmissionsriemen, der einen auf dem Drehgestellrahmen angeordneten Achsgenerator antreibt, für Hochgeschwindigkeitseinsätze nicht geeignet ist. Die Radsatzwelle führt große axiale und radiale Versätze und im Übrigen auch noch dreidimensionale, schräge Bewegungen aus, die den Antrieb über einen Transmissionsriemen auschließen.

Aus diesem Grunde schlägt die Erfindung vor, dass der Achsgenerator unmittelbar auf der Radsatzwelle selbst sitzt und sein Rotor drehfest auf dieser befestigt ist, während der Stator drehfest am Drehgestellrahmen oder einem anderen festen Teil des Waggons abgestützt ist.

Statt einer drehfesten Klemmverbindung des Rotors auf der Radsatzwelle können selbstverständlich auch andere formschlüssige Verbindungen verwendet werden, wie z. B. Keilnuten, Verzahnungen und dergleichen, wobei z. B. die Wellenaufnahme im Achsgenerator eine entsprechende Innenverzahnung aufweist, durch welche die Radsatzwelle mit einer zugeordneten Außenverzahnung hindurchgreift.

Es werden also sämtliche drehfesten Verbindungen zwischen einer Radsatzwelle und dem Rotor eines Achsgenerators als erfindungswesentlich beansprucht. Derartige Verbindungen können entweder klemmschlüssig oder formschlüssig ausgebildet sein.

Vorstehend wurde ausgeführt, dass der Achsgenerator bevorzugt vollkommen teilbar ist, d. h., er besteht aus zwei spiegelsymmetrisch zueinander angeordneten Teilen, die mit Hilfe von entsprechenden und geeigneten Verschraubungen so auf die Radsatzwelle angebracht werden, dass die Radsatzwelle die Innenbohrung des Achsgenerators reib- oder formschlüssig durchgreift.

In einer anderen Ausgestaltung der Erfindung ist es jedoch vorgesehen, dass der Achsgenerator unteilbar ist, d. h. er ist insgesamt ein durchgehendes, rundum laufendes, etwa rotationssymmetrisches Teil, dessen Wellenbohrung von der Radsatzwelle durchgriffen wird, wobei in diesem Fall die Montage des Achsgenerators nur dann gelingt, wenn die Radscheibe und die Bremsscheibe von der Radsatzwelle abgenommen werden.

Es gibt also die folgenden beiden unterschiedlichen Ausführungen des Achsgenerators:
1. Ein voll hälftig geteilter Achsgenerator, der mit seinen beiden Hälften auf der Radsatzwelle montierbar ist oder
2. ein nicht teilbarer Achsgenerator, der über die offene Stirnseite der Radsatzwelle auf diese aufgeschoben wird und etwa im Mittenbereich der Radsatzwelle unterhalb des Drehgestellrahmens angeordnet ist.

In der folgenden Beschreibung wird der einfacheren Beschreibung wegen nur noch der teilbare Achsgenerator näher beschrieben, weil der nicht-teilbare Generator in analoger Weise aus der Beschreibung des teilbaren Generators hervorgeht.

Wichtig ist, dass der teilbare Achsgenerator aus zwei vollkommen spiegelsymmetrisch zueinander angeordneten Hälften besteht und zwar einem teilbaren Statorgehäuse, welches über Verbindungsflansche miteinander verbindbar ist, so dass sich ein jeweils hälftiges oberes und unteres Statorgehäuse ergibt und ferner ein im Statorgehäuse angeordneter Rotor, der ebenfalls teilbar ist, wobei jede Rotorhälfte jeweils aus einer inneren und einer äußeren Rotorringhälfte besteht.

Die äußere Rotorringhälfte nimmt hierbei die Permanentmagnete auf, während die innere Rotorringhälfte den Rotorkörper bildet. Hierbei ist der Rotorkörper mit radial auswärts gerichteten und gleichmäßig am Umfang verteilt angeordneten Stegen über Verschraubungen mit der äußeren Rotorringhälfte verschraubt.
Diese beiden zusammengesetzten Rotor-Ringhälften werden im Bereich des Rotorkörpers über zugeordnete Verschraubungen miteinander verbunden, so dass sich eine umlaufende, innere Klemmaufnahme ergibt, welche die Radsatzwelle übergreift und dort klemmend auf dieser befestigt ist.

Eine solche Klemmaufnahme kann sehr hohe Drehmomenten übertragen und es bedarf eigentlich keiner weiteren drehfesten Verbindungsglieder mehr.

Selbstverständlich ist die Erfindung hierauf nicht beschränkt. Es können auch zur weiteren drehfesten Verbindung Keilnuten und dergleichen vorgesehen werden.

Jede äußere Rotorringhälfte besteht aus jeweils stirnseitig angeordneten, parallel ausgerichteten Rotorpressplatten, die gleichmäßig am Umfang der Rotorringhälfte verteilt angeordnet sind und stirnseitig durch in axialer Richtung verlaufende Spannbolzen miteinander verbunden sind.

Zwischen den Rotorpressplatten sind die Rotorbleche angeordnet und zwischen den Rotorblechen sind radial auswärts gerichtete Schlitze vorgesehen, in welchen Permanentmagneten aufgenommen sind.

Hierbei sind eine Vielzahl von Permanentmagneten in radialer Richtung auswärts gerichtet gleichmäßig am Umfang verteilt angeordnet.

Es handelt sich also in der gezeigten Ausführungsform um einen bürstenlosen, permanent erregten Drehstromgenerator, weil die Induktionsspannungen in den statorseitigen Wicklungen erzeugt werden.

Hierauf ist die Erfindung jedoch nicht beschränkt. Die Erfindung kann auch bürstenbehaftete Drehstromgeneratoren betreffen oder auch fremderregte Drehstromgeneratoren.

Ebenso ist die Erfindung nicht auf Drehstromgeneratoren beschränkt. Es könnten auch Zweiphasen-Generatoren verwendet werden.

Nachdem zwei vollkommen symmetrische Rotorringteile und zwei vollkommen symmetrische Statorringteile vorhanden sind, ergibt sich hieraus, dass die beiden Statorringwicklungen jeweils auch elektrisch getrennt sind.

Die obere Statorringwicklung und die untere Statorringwicklung sind deshalb getrennt aus dem Stator herausgeführt und in einer gehäusefesten Klemmplatte miteinander vereinigt und parallel geschaltet.

In einer Weiterbildung der Erfindung ist im Übrigen als Sicherheitsmaßnahme vorgesehen, dass das Statorgehäuse des Achsgenerators - dessen Rotor drehfest mit der Radsatzwelle verbunden ist -über eine sogenannte Drehmomentenstütze mit dem Drehgestellrahmen verbunden ist. Es handelt sich hierbei um eine Sicherheitseinrichtung, die dann auslösen soll, wenn der Achsgenerator fressen sollte und die Radsatzwelle blockiert. In diesem Fall wird ein sehr hohes Drehmoment über das Statorgehäuse auf die am Statorgehäuse außen ansetzende Drehmomentenstütze übertragen und diese weist einen Stehbolzen mit einer zugeordneten Nottrennstelle auf, der somit abreißt und dadurch kommt der Achsgenerator vom Drehgestellrahmen frei. Nachdem diese Verbindung im Notfall gelöst wird, wird in diesem Fall der Achsgenerator frei mit der Radsatzwelle umlaufen, ohne die Radsatzwelle zu blockieren.

Im Folgenden wird die Erfindung anhand von lediglich einen Ausführungsweg darstellenden Zeichnungen näher erläutert. Hierbei gehen aus den Zeichnungen und ihrer Beschreibung weitere Vorteile der Erfindung hervor.

Es zeigen:
- Figur 1:: Perspektivische Untenansicht auf den Drehgestellrahmen eines Eisenbahnwaggons mit Darstellung der Einbaulage des Achsgenerators
- Figur 2:: die perspektivische Außenansicht des Achsgenerators
- Figur 3:: der Achsgenerator nach Figur 3 in teilweise geöffnetem Zustand
- Figur 4:: die perspektivische Ansicht der Rotorhälfte
- Figur 5:: Stirnansicht des Achsgenerators
- Figur 6:: Schnitt durch den Achsgenerator
- Figur 7:: die Stirnansicht des Achsgenerators teilweise im Schnitt mit Darstellung einer Drehmomentenstütze

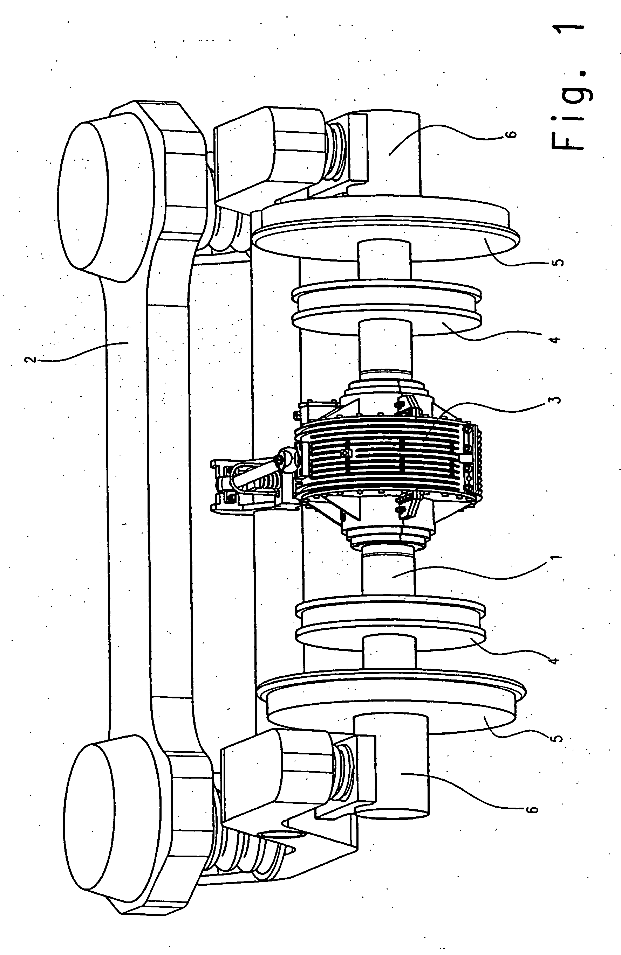

In Figur 1 ist perspektivisch eine Unteransicht eines Eisenbahnwaggons dargestellt. An einem Drehgestellrahmen 2 ist eine Radsatzwelle 1 angebracht, auf der drehfest eine Bremsscheibe 4 und eine äußere Radscheibe 5 befestigt ist.

Mit dem Drehgestellrahmen 2 ist im Übrigen ein äußeres Achslager 6 für die Lagerung der Radsatzwelle 1 verbunden.

Wichtig ist, dass unmittelbar auf der Radsatzwelle 1 der erfindungsgemäße Achsgenerator 3 angeflanscht ist, indem er unmittelbar von der Radsatzwelle 1 durchgriffen und als zweiteiliges Teil ausgebildet ist.

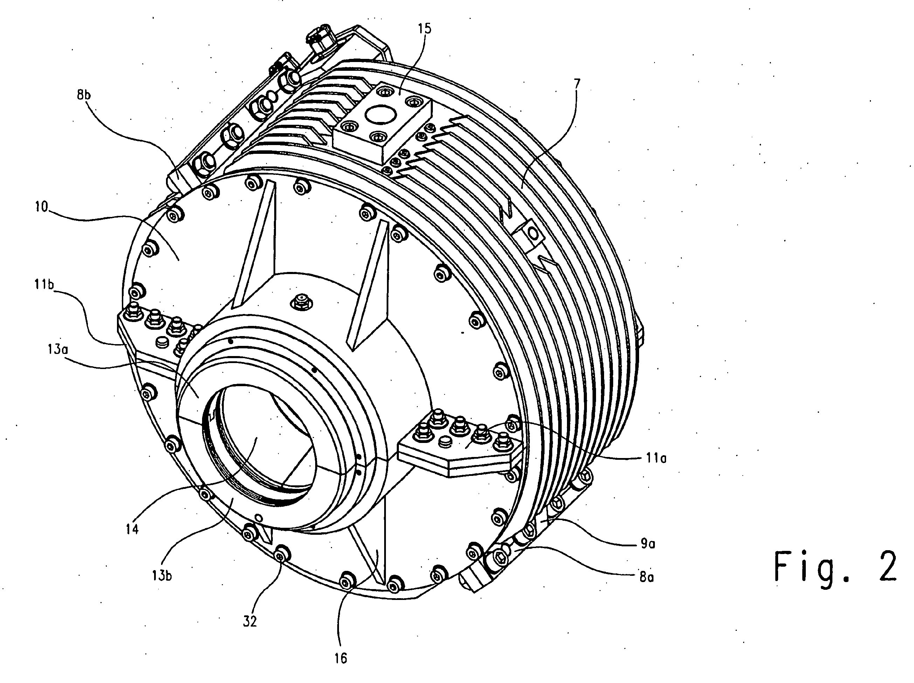

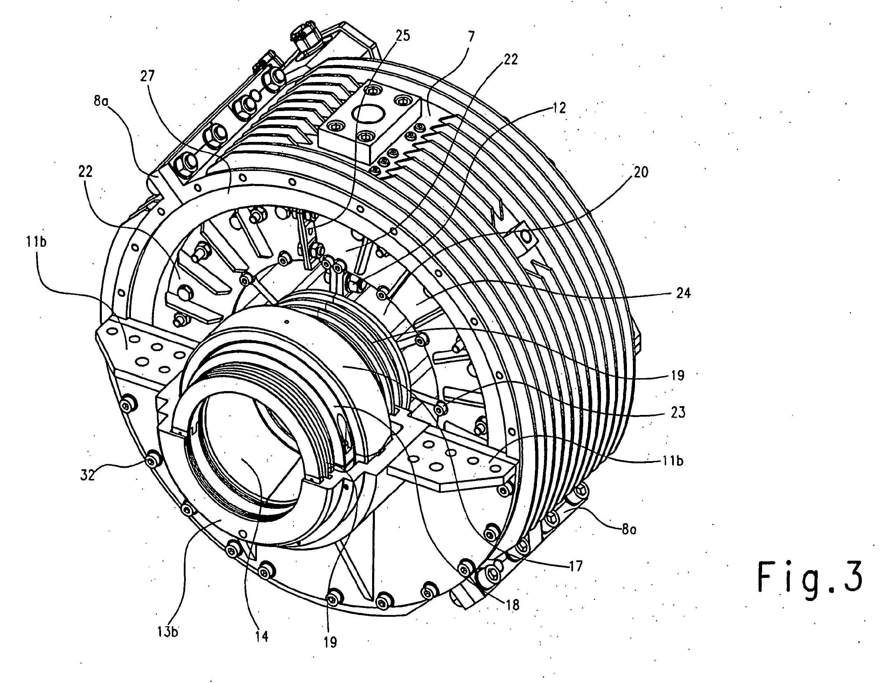

Aus Figur 2 und 3 ergeben sich weitere Einzelheiten des Aufbaus des geteilten Achsgenerators 3.

Das Statorgehäuse 7 ist zweiteilig ausgebildet und besteht aus einer oberen und unteren Ringhälfte, wobei die beiden Ringhälften durch Verbindungsflansche 8a, 8b miteinander verbunden sind.

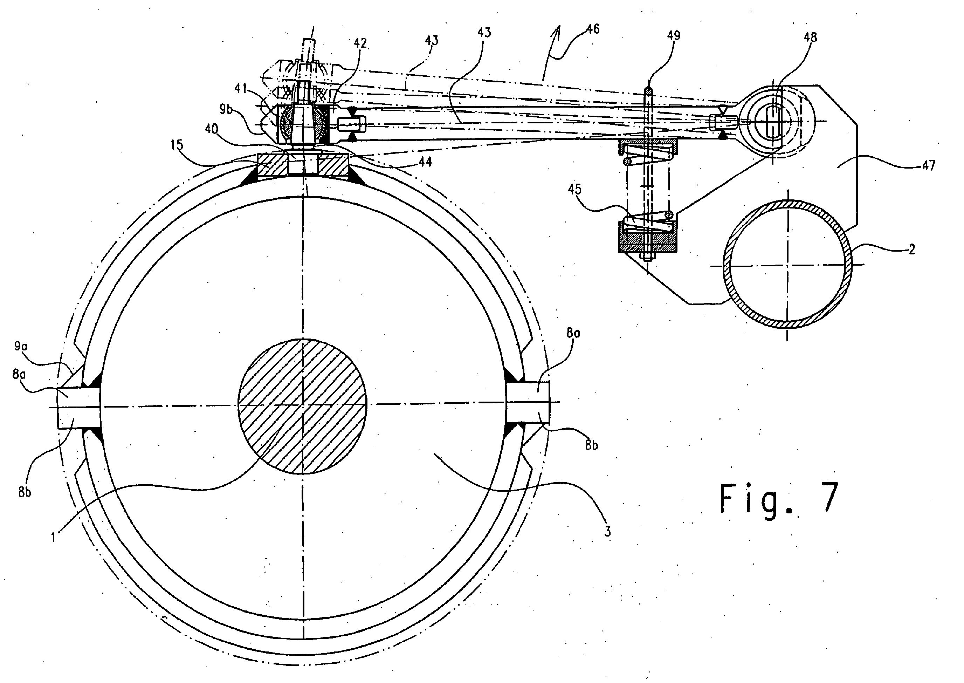

Am äußeren Umfang des oberen Statorgehäuses 7 ist drehfest eine Aufnahme 15 für die Anbringung der in Figur 7 dargestellten Drehmomentenstütze dargestellt.

In Figur 2 ist erkennbar, dass die Radsatzwelle 1 durch die Wellenbohrung 14 des Rotors hindurchgreift und drehfest mit dem Rotor verbunden ist, wobei eine Lagerschale 13 erkennbar ist, die ebenfalls geteilt ist und aus den Lagerschalenhälften 13a, 13b gebildet ist.

In Figur 2 ist im Übrigen auch das stirnseitige Lagerschild 10 gezeigt, welches mit Hilfe von Verschraubungen 32 auf dem Statorgehäuse 7 verschraubt ist.

Gegenüber der Lagerschale 13 ist das Lagerschild 10 mit Hilfe von Verstärkungsrippen 16 angeflanscht.

Die dort gezeigten, einander gegenüberliegenden Verbindungsflansche 11 sind wiederum geteilt und bestehen aus den Verbindungsflanschen 11a, 11b, die miteinander verschraubt sind.

Im Bereich der Verbindungsflansche werden die beiden Lagerschildhälften 10 miteinander verbunden.

In Figur 3 ist die obere Hälfte des Lagerschildes 10 entfernt und es ist der Innenaufbau des Rotors dargestellt.

Erkennbar ist zunächst, dass lediglich nur noch der untere Verbindungsflansch 11b auf beiden Seiten vorhanden ist, während die oberen Verbindungsflansche 11a fehlen, weil auch der entsprechende obere Teil des Lagerschildes 10 entfernt wurde.

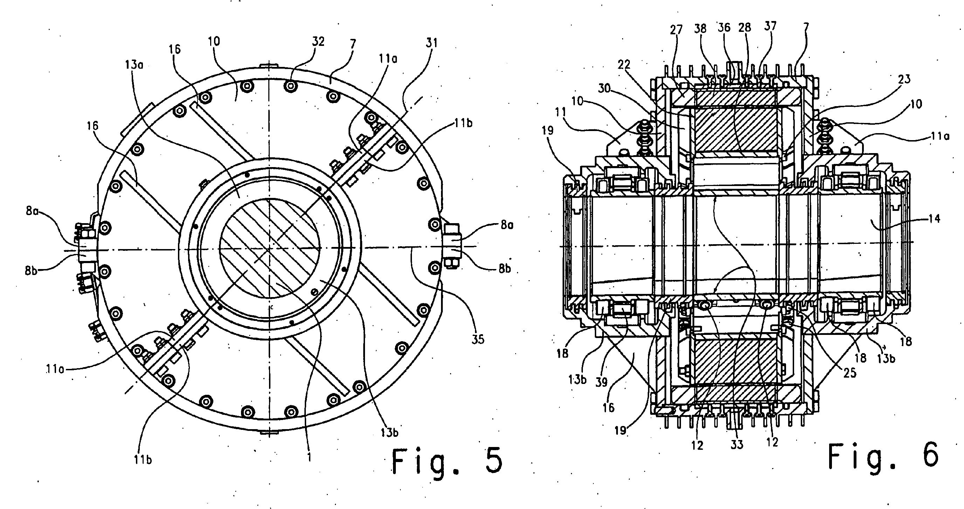

Das Lager weist einen Lageraußenring 17 auf, und trägt - gemäß Figur 6 - Zylinderrollenlagern 39.

Axial vorn und hinter dem Lageraußenring 17 sind Labyrinthdichtungen 19 angeordnet. Mithilfe einer Lagerführung 18 wird eine axiale Sicherung des Lageraußenrings 17 erreicht.

Wichtig ist, dass der Rotor insgesamt aus einer inneren Rotorringhälfte 26 und einer äußeren Rotorringhälfte 24 besteht.

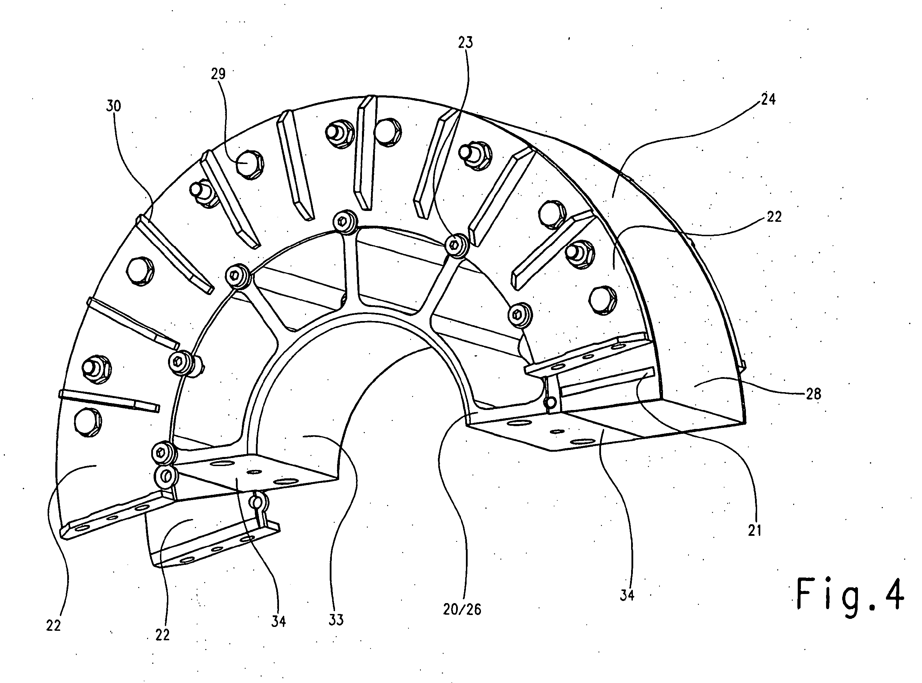

Die innere Rotorringhälfte 26 besteht im Wesentlichen aus dem Rotorkörper 20, siehe auch Figur 4, der beispielsweise als Gussteil ausgebildet ist und eine Vielzahl in radialer Richtung weisende Rippen aufweist. Diese Rippen sind werkstoffeinstückig mit dem Rotorkörper 20 verbunden.

Der Rotorkörper bildet jeweils stirnseitig Flanschflächen 34, in deren Bereich die obere Rotorhälfte mit der unteren Rotorhälfte über zugeordnete Verschraubungen miteinander verbunden ist.

Die innere Rotorringhälfte ist mit Hilfe von Verschraubungen 12 mit der gegenüberliegenden, symmetrisch angeordneten anderen Rotorringhälfte verschraubt.

Wenn in der folgenden Beschreibung lediglich nur einzelne Teile in den Zeichnungen mit Bezugszeichen versehen sind, so ist dies nicht einschränkend zu verstehen. Es wurden - nachdem es sich um voll rotationssymmetrische Halbteile handelt, jeweils nur der Einfachheit halber einige wesentliche Teile der einen oder anderen Symmetriehälfte mit Bezugszeichen versehen.

Es versteht sich von selbst, dass bezüglich einer mittleren Trennebene auf der gegenüberliegenden Seite genau die gleichen Teile mit den gleichen Bezugszeichen vorhanden sind.

Die innere Rotorringhälfte 26 ist über Befestigungs-schrauben 23 mit der äußeren Rotorringhälfte 24 verschraubt.

Die äußere Rotorringhälfte besteht aus Rotorpressplatten 22, die jeweils außenliegend (stirnseitig) angeordnet sind und die über ihre axiale Länge durch zugeordnete Spannbolzen 29 miteinander verbunden sind.

Die Rotorpressplatten 22 decken stirnseitig die Rotorbleche 28 ab, die Öffnungen oder Schlitze für dort eingeschobene Permanentmagneten 21 tragen. An den Rotorpressplatten 22 sind Kühlrippen 30 angeformt.

Die Rotorplatten sind über Verschraubungen 25 miteinander verschraubt, um so einen voll umlaufenden (in sich geschlossenen) ringförmigen Rotor zu erreichen.

In Figur 3 ist die Statorwicklung 27 dargestellt, die sich lediglich um einen Umfangswinkel von 180° erstreckt und elektrisch getrennt von der gegenüberliegenden, anderen Statorwicklung 27 ist.

Die Anschlüsse der Statorwicklungen sind nach außen geführt und in einem gehäusefesten Klemmbrett zusammengeschaltet, um die beiden elektrisch getrennten Statorwicklungen wahlweise als Parallel- oder auch als Serienschaltung zu verschalten.

In Figur 5 ist noch angegeben, dass das Lagerschild 10 im Bereich einer Trennebene 31 getrennt ist, so dass sich diese Trennebene durch die Verbindungsflansche 11a, 11b erstreckt.

Gleichfalls ist dargestellt, dass das Statorgehäuse 7 im Bereich der Trennebene 35 getrennt ist und die Verbindung mit Hilfe der vorher genannten Verbindungsflansche 8a, 8b erfolgt.

Somit ist es möglich, die Verbindungsflansche 34 des Rotors über die Verschraubung 25 miteinander zu verschrauben, um so eine innere Klemmaufnahme 33 für die Wellenbohrung 14 zu erreichen.

Die Klemmaufnahme umgreift formschlüssig die Radsatzwelle 1, welche die Wellenbohrung 14 in voller Länge durchsetzt.

In Figur 6 sind noch weitere Einzelheiten des Aufbaus des Stators dargestellt. Über Nutensteine 36 und Verschraubungen 37 wird das Blechpaket des Statorbleches 38 radial auswärts gerichtet in das Statorgehäuse 7 hineingezogen und dort gehalten.

Die Figur 7 zeigt die vorher erwähnte Drehmomentenstütze.

Drehfest am Außenumfang des Statorgehäuses 7 ist die vorher erwähnte Aufnahme 15 vorhanden, in welche ein Stehbolzen 40 mit einer zugeordneten Nottrennstelle 44 eingesetzt ist.

Die Nottrennstelle 44 ist durch einen Bund verminderten Durchmessers im Bereich des Stehbolzens 40 gebildet, der im Falle einer unerwünscht hohen Drehmomentenbeanspruchung auf den Stehbolzen bricht und somit den Stehbolzen 40 abtrennt.

Am oberen Teil des Stehbolzens 40 ist ein Gummilager 41 angeordnet, welches von einer Lagerbüchse 42 eines Tragarmes 43 übergriffen wird.

Der Tragarm 43 ist mit seinem freien Ende drehbar in einem Drehlager 48 am Drehgestellrahmen 2 aufgenommen, wobei das Drehlager 48 im Bereich eines Lagerbockes 47 am Drehgestellrahmen 2 angeordnet ist.

Um ein vollständiges Entfernen der Drehmomentenstütze im Notfall von dem schnell umlaufenden Achsgenerator 3 zu ermöglichen, ist zusätzlich noch eine Druckfeder 45 am Drehgestellrahmen angeordnet, die an ihrem oberen Ende einen Bolzen aufweist, der den Tragarm 43 durchgreift. Somit ist der Tragarm 43 in Pfeilrichtung 46 durch die Druckfeder 45 vorgespannt.

Sobald die Nottrennstelle 44 öffnet, wird der Tragarm 43 in Pfeilrichtung 46 hochgeschleudert und der Achsgenerator 3 kann frei umlaufen und führt nicht zu einer Blockierung der Radsatzwelle 1.

In diesem Notfall werden auch die zugeordneten Kabelverbindungen zum Achsgenerator abgetrennt. In einer ersten Ausführung sind die Kabel im Bereich der Trennebene reibschlüssig und elektrisch leitfähig durch Schrauben verbunden. Sobald ein unzulässig hohes Drehmoment in Längsrichtung auf die Kabel ausgeübt wird, öffnet sich diese reibschlüssige Verbindung und die Kabel werden freigegeben.

In einer anderen Ausgestaltung kann es auch vorgesehen sein, dass die Kabel über in Zugrichtung zusammengesteckte Stecker miteinander verbunden sind, so dass sich die Steckverbindungen bei einer unzulässig hohen Zugkraft auf die Kabel lösen.

Am Tragarm 43 ist eine Auflaufschräge 9b angeordnet, die mit einer zugeordneten, gehäusefesten Auflaufschräge 9a am Außenumfang des Statorgehäuses 7 zusammenwirkt. Beim Auslösen der Nottrennstelle wird der Tragarm durch das Zusammentreffen der beiden Auflaufschrägen 9a, 9b beschleunigt vom Außenumfang des Statorgehäuses abgeschleudert und kann das schnell umlaufende Statorgehäuse nicht mehr beschädigen.

Um beim Abschleudern des Tragarmes in Richtung auf den Wagenunterbau eine Beschädigung des Wagenunterbaus zu vermeiden ist eine Rückhaltevorrichtung 49 im Bereich des Stehbolzens der Druckfeder 45 vorgesehen, um das Ausschwenken des Tragarmes in Pfeilrichtung 46 zu begrenzen.

### Zeichnungslegende

- 1: Radsatzwelle
- 2: Drehgestellrahmen
- 3: Achsgenerator
- 4: Bremsscheibe
- 5: Radscheibe
- 6: Achslager
- 7: Statorgehäuse
- 8: Verbindungsflansch a, b
- 9: Auflaufschräge a, b
- 10: Lagerschild
- 11: Verbindungsflansch a, b
- 12: Verschraubung
- 13: Lagerschale a, b
- 14: Wellenbohrung
- 15: Aufnahme
- 16: Verstärkungsrippe
- 17: Lageraußenring
- 18: Lagerführung
- 19: Labyrinthdichtung
- 20: Rotorkörper
- 21: Permanentmagnet
- 22: Rotorpressplatte
- 23: Befestigungsschrauben
- 24: äußere Rotorringhälfte
- 25: Verschraubung
- 26: innere Rotorringhälfte
- 27: Statorwicklung
- 28: Rotorblock
- 29: Spannbolzen
- 30: Kühlrippe
- 31: Trennebene (Lagerschild)
- 32: Verschraubung
- 33: Klemmaufnahme
- 34: Flanschfläche
- 35: Trennebene (Statorgehäuse)
- 36: Nutenstein
- 37: Verschraubung
- 38: Statorblech
- 39: Zylinderrollenlager
- 40: Stehbolzen
- 41: Gummilager
- 42: Lagerbüchse
- 43: Tragarm
- 44: Nottrennstelle
- 45: Druckfeder
- 46: Pfeilrichtung
- 47: Lagerbock
- 48: Drehlager
- 49: Rückhaltevorrichtung

## Patentansprüche

1. Achsgeneratorsystem für Eisenbahnwagen und schienengebundene, nicht-selbstangetriebene Fahrzeuge bestehend aus mindestens einem Achsgenerator (3), dessen Rotor (20, 24, 26) drehfest mit der Radsatzwelle (1) und dessen Statorgehäuse (7) drehfest am Drehgestellrahmen (2) oder einem anderen Teil des Waggons abgestützt ist, wobei der Achsgenerator (3) direkt auf der Radsatzwelle (1) angeflanscht und von dieser durchgriffen ist, **dadurch gekennzeichnet, dass** zwischen Rotorpressplatten (22) Rotorbleche (28) angeordnet sind und dass zwischen den Rotorblechen (28) radial auswärts gerichtete Schlitze vorgesehen sind, in denen Permanentmagnete (21) aufgenommen sind.

2. Achsgeneratorsystem nach Anspruch 1, **dadurch gekennzeichnet, dass** der Achsgenerator zweiteilig ausgebildet ist und aus zwei spiegelsymmetrisch zueinander angeordneten Hälften besteht, die miteinander verschraubt sind.

3. Achsgeneratorsystem nach Anspruch 1 oder 2, **dadurch gekennzeichnet, dass** der Achsgenerator als bürstenloser, permanenterregter Drehstromgenerator ausgebildet ist.

4. Achsgeneratorsystem nach einem der Ansprüche 1 bis 3, **dadurch gekennzeichnet, dass** der Achsgenerator (3) eine elektrische Leistung von 25 kW erzeugt.

5. Achsgeneratorsystem nach einem der Ansprüche 1 bis 4, **dadurch gekennzeichnet, dass** der Rotor (20, 24, 26) des Achsgenerators (3) mit einer drehfesten Klemmverbindung die Radsatzwelle (1) umgreift.

6. Achsgeneratorsystem nach einem der Ansprüche 1 bis 5, **dadurch gekennzeichnet, dass** der Achsgenerator (3) aus zwei spiegelsymmetrisch zueinander angeordneten Teilen besteht, die mit Hilfe von Verschraubungen auf die Radsatzwelle angebracht sind, und dass die Radsatzwelle (1) die Wellenbohrung (14) des Achsgenerators (3) reib- oder formschlüssig durchgreift.

7. Achsgeneratorsystem nach einem der Ansprüche 2 bis 6, **dadurch gekennzeichnet, dass** der teilbare Achsgenerator (3) aus zwei vollkommen spiegelsymmetrisch zueinander angeordneten Hälften besteht und zwar aus einem teilbaren Statorgehäuse (7), welches über Verbindungsfilansche miteinander verbindbar ist, so dass sich ein jeweils hälftiges oberes und unteres Statorgehäuse ergibt und ferner aus einem im Statorgehäuse (7) angeordneten Rotor (20, 24, 26), der ebenfalls teilbar ist besteht.

8. Achsgeneratorsystem nach einem der Ansprüche 2 bis 7, **dadurch gekennzeichnet, dass** jede Rotorhälfte jeweils aus einer inneren und einer äußeren Rotorringhälfte (24, 25) besteht.

9. Achsgeneratorsystem nach Anspruch 8, **dadurch gekennzeichnet, dass** die äußere Rotorringhälfte (24) die Permanentmagnete aufnimmt, und dass die innere Rotorringhälfte (26) den Rotorkörper (20) bildet.

10. Achsgeneratorsystem nach Anspruch 8 oder 9, **dadurch gekennzeichnet, dass** beiden zusammengesetzten Rotor-Ringhälften im Bereich des Rotorkörpers (20) über zugeordnete Verschraubungen miteinander verbunden sind , dass sich dadurch eine umlaufende, innere Klemmaufnahme ergibt, weiche die Radsatzwelle übergreift und dort klemmend auf dieser befestigt ist.

11. Achsgeneratorsystem nach einem der Ansprüche 8 bis 10, **dadurch gekennzeichnet, dass** jede äußere Rotorringhälfte (24) aus jeweils stirnseitig angeordneten, parallel ausgerichteten Rotorpressplatten (22) besteht, die gleichmäßig am Umfang der Rotorringhälfte (24) verteilt angeordnet sind und stirnseitig durch in axialer Richtung verlaufende Spannbolzen (29) miteinander verbunden sind.

12. Achsgeneratorsystem nach einem der Ansprüche 1 bis 11, **dadurch gekennzeichnet, dass** das Statorgehäuse (7) des Achsgenerators über eine Drehmomentenstütze mit dem Drehgestellrahmen (2) verbunden ist.

13. Achsgeneratorsystem nach Anspruch 12, **dadurch gekennzeichnet, dass** die Drehmomentenstütze aus einem Tragarm (43) besteht, der einen fest mit dem Außenumfang des Statorgehäuses (7) verbunden Stehbolzen (40) übergreift, der einen Bund verminderten Durchmessers als Nottrennstelle (44) ausbildet.

14. Achsgeneratorsystem nach einem der Ansprüche 1 bis 13, **dadurch gekennzeichnet, dass** der Tragarm (43) durch eine Druckfeder (45) in radialer Richtung auswärts gerichtet vorgespannt ist.

15. Achsgeneratorsystem nach einem der Ansprüche 1 bis 14, **dadurch gekennzeichnet, dass** im Fall einer Notauslösung auch die Kabelverbindungen zum Achsgenerator (3) abtrennbar sind.

## Claims

1. Axle generator system for railway vehicles and rail-bound, non-self-driven vehicles consisting of at least one axle generator (3), the rotor (20, 24, 26) of which is non-rotatably engaged with the wheel set shaft (1) and the stator housing (7) of which is non-rotatably supported on the rotary bogie frame (2) or another part of the wagon, the axle generator (3) being directly flanged to the wheel set shaft (1), which passes through said axle generator, **characterised in that** rotor plates (28) are arranged between rotor press plates (22), and **in that** radially outwardly directed slots are provided between the rotor plates (28), in which slots permanent magnets (21) are received.

2. Axle generator system according to claim 1, **characterised in that** the axle generator is configured in two parts and consists of two halves arranged mirror-symmetrically with respect to one another, which are screwed to one another.

3. Axle generator system according to claim 1 or 2, **characterised in that** the axle generator is configured as a brushless, permanently excited three-phase generator.

4. Axle generator system according to any one of claims 1 to 3, **characterised in that** the axle generator (3) produces an electric power of 25 kW.

5. Axle generator system according to any one of claims 1 to 4, **characterised in that** the rotor (20, 24, 26) of the axle generator (3) encompasses the wheel set shaft (1) with a non-rotatable clamping connection.

6. Axle generator system according to any one of claims 1 to 5, **characterised in that** the axle generator (3) consists of two parts arranged mirror-symmetrically with respect to one another, which are attached to the wheel set shaft with the aid of screw connections, and **in that** the wheel set shaft (1) engages through the shaft bore (14) of the axle generator (3) with frictional or interlocking engagement.

7. Axle generator system according to any one of claims 2 to 6, **characterised in that** the separable axle generator (3) consists of two halves which are arranged completely mirror-symmetrically with respect to one another and specifically of a separable stator housing (7), which can be joined together by connecting flanges, thus producing a respective upper and lower half stator housing, and furthermore consists of a rotor (20, 24, 26) which is arranged in the stator housing (7) and is also separable.

8. Axle generator system according to any one of claims 2 to 7, **characterised in that** each rotor half respectively consists of an inner and an outer rotor ring half (24, 25).

9. Axle generator system according to claim 8, **characterised in that** the outer rotor ring half (24) receives the permanent magnets and **in that** the inner rotor ring half (26) forms the rotor body (20).

10. Axle generator system according to claim 8 or 9, **characterised in that** the two assembled rotor ring halves are connected to one another in the region of the rotor body (20) by associated screw connections, **in that** a peripheral, inner clamping receiver is thereby produced, which engages over the wheel set shaft and is fastened thereon in a clamping manner.

11. Axle generator system according to any one of claims 8 to 10, **characterised in that** each outer rotor ring half (24) consists of respective rotor press plates (22) oriented in parallel and arranged at the end, which are arranged uniformly distributed on the periphery of the rotor ring half (24) and are connected to one another at the end by tension bolts (29) extending in the axial direction.

12. Axle generator system according to any one of claims 1 to 11, **characterised in that** the stator housing (7) of the axle generator is connected by means of a torque bracket to the rotary bogie frame (2).

13. Axle generator system according to claim 12, **characterised in that** the torque bracket consists of a support arm (43), which engages over a stay bolt (40) which is rigidly connected to the outer periphery of the stator housing (7) and forms a collar of reduced diameter as an emergency cut-off point (44).

14. Axle generator system according to any one of claims 1 to 13, **characterised in that** the support arm (43) is outwardly biased by a compression spring (45) in the radial direction.

15. Axle generator system according to any one of claims 1 to 14, **characterised in that** in the event of an emergency triggering, the cable connections to the axle generator (3) can also be cut off.

## Revendications

1. Système de génératrice d'essieu pour véhicules ferroviaires et véhicules sur rails non automoteurs, composé d'au moins une génératrice d'essieu (3) dont le rotor (20, 24, 26) est solidaire en rotation de l'essieu monté (1) tandis que le carter de stator (7) est solidaire en rotation du châssis de bogie (2) ou d'une autre partie du wagon, la génératrice d'essieu (3) étant bridée directement sur l'essieu monté (1) et étant traversée par celui-ci, **caractérisé en ce que** des tôles de rotor (28) sont disposées entre des plaques de serrage de rotor (22) et **en ce qu'**il est prévu entre les tôles de rotor (28) des fentes dirigées radialement vers l'extérieur dans lesquelles sont logés des aimants permanents (21).

2. Système de génératrice d'essieu selon la revendication 1, **caractérisé en ce que** la génératrice d'essieu est en deux parties et se compose de deux moitiés qui sont disposées en miroir et qui sont vissées ensemble.

3. Système de génératrice d'essieu selon la revendication 1 ou 2, **caractérisé en ce que** la génératrice d'essieu est conçue comme un alternateur sans balais, excité en permanence.

4. Système de génératrice d'essieu selon l'une des revendications 1 à 3, **caractérisé en ce que** la génératrice d'essieu (3) produit une puissance électrique de 25 kW.

5. Système de génératrice d'essieu selon l'une des revendications 1 à 4, **caractérisé en ce que** le rotor (20, 24, 26) de la génératrice d'essieu (3) entoure l'essieu monté (1) avec une liaison par serrage solidaire en rotation.

6. Système de génératrice d'essieu selon l'une des revendications 1 à 5, **caractérisé en ce que** la génératrice d'essieu (3) se compose de deux parties disposées en miroir qui sont installées sur l'essieu monté à l'aide de vissages, et **en ce que** l'essieu monté (1) traverse par friction ou par complémentarité de forme le perçage (14) de la génératrice d'essieu (3).

7. Système de génératrice d'essieu selon l'une des revendications 2 à 6, **caractérisé en ce que** la génératrice d'essieu divisible (3) se compose de deux moitiés disposées parfaitement en miroir : un carter de stator divisible (7) qui est apte à être réuni à l'aide de brides de liaison, ce qui donne une moitié de carter de stator supérieure et une moitié de carter de stator inférieure, et un rotor (20, 24, 26) qui est disposé dans le carter de stator (7) et qui est lui aussi divisible.

8. Système de génératrice d'essieu selon l'une des revendications 2 à 7, **caractérisé en ce que** chaque moitié de rotor se compose de moitiés de bagues de rotor intérieure et extérieure (24, 26).

9. Système de génératrice d'essieu selon la revendication 8, **caractérisé en ce que** la moitié de bague de rotor extérieure (24) reçoit les aimants permanents et **en ce que** la moitié de bague de rotor intérieure (26) forme le corps de rotor (20).

10. Système de génératrice d'essieu selon la revendication 8 ou 9, **caractérisé en ce que** les deux moitiés de bagues de rotor assemblées sont reliées dans la zone du corps de rotor (20) par des vissages associés, et **en ce que** cela donne un logement à serrage intérieur circulaire qui entoure l'essieu monté et qui est fixé par serrage à celui-ci à cet endroit.

11. Système de génératrice d'essieu selon l'une des revendications 8 à 10, **caractérisé en ce que** chaque moitié de bague de rotor extérieure (24) se compose de plaques de serrage de rotor (22) disposées sur le côté frontal et orientées parallèlement qui sont réparties régulièrement sur la circonférence de ladite moitié de bague de rotor (24) et qui sont reliées entre elles, côté frontal, par des axes de serrage (29) qui s'étendent dans le sens axial.

12. Système de génératrice d'essieu selon l'une des revendications 1 à 11, **caractérisé en ce que** le carter de stator (7) de la génératrice d'essieu est relié au châssis de bogie (2) par l'intermédiaire d'un support de couple.

13. Système de génératrice d'essieu selon la revendications 12, **caractérisé en ce que** le support de couple se compose d'un bras de support (43) qui couvre un goujon (40) relié solidement à la circonférence extérieure du carter de stator (7) et qui forme un épaulement de diamètre réduit, comme point de séparation d'urgence (44).

14. Système de génératrice d'essieu selon l'une des revendications 1 à 13, **caractérisé en ce que** le bras de support (43) est contraint radialement vers l'extérieur par un ressort de compression (45).

15. Système de génératrice d'essieu selon l'une des revendications 1 à 14, **caractérisé en ce qu'**en cas de déclenchement d'urgence, les liaisons par câble avec la génératrice d'essieu (3) sont aptes à être détachées.
